# EUROPEAN PATENT SPECIFICATION

(11) **EP 3 866 957 B1**
(45) Date of publication and mention of the grant of the patent: **24.07.2024**
(21) Application number: 20788825.6
(22) Date of filing: 14.10.2020
(51) Int. Cl.: B01D 65/08, B01D 69/04, B01D 69/08

(54) **METHOD FOR FORMING THE MEMBRANE SYSTEM**
VERFAHREN ZUR HERSTELLUNG DES MEMBRANSYSTEMS
PROCÉDÉ DE FABRICATION DU SYSTÈME DE MEMBRANE

(30) Priority: 16.10.2019 EP 19203629
(43) Date of publication of application: 25.08.2021
(73) Proprietor: DWI - Leibniz-Institut für Interaktive Materialien e.V., 52056 Aachen (DE)
(72) Inventor: TEPPER, Maik, 52064 Aachen (DE); WALORSKI, Julius, 52064 Aachen (DE); WESSLING, Matthias, 52074 Aachen (DE)
(74) Representative: Müller-Boré & Partner Patentanwälte PartG mbB
(86) International application number: PCT/EP2020/078923
(87) International publication number: WO 2021/074235

(56) References cited:
- WO-A1-2018/235901
- WO-A1-81/02683
- US-A- 5 628 909
- US-A1- 2003 140 790
- US-A1- 2017 246 593
- US-A1- 2020 108 350
- LUELF TOBIAS ET AL: "3D-printed rotating spinnerets create membranes with a twist", JOURNAL OF MEMBRANE SCIENCE, ELSEVIER BV, NL, vol. 555, 13 March 2018 (2018-03-13), pages 7 - 19, XP085382555, ISSN: 0376-7388, DOI: 10.1016/J.MEMSCI.2018.03.026
- MEMB SCI ET AL: "3D-printed rotating spinnerets create membranes with a twist", JOURNAL OF MEMBRANE SCIENCE, 1 January 2018 (2018-01-01), pages 1 - 6, XP055684252, Retrieved from the Internet <URL:https://ars.els-cdn.com/content/image/1-s2.0-S0376738817335834-mmc1.pdf> [retrieved on 20200407]

## Description

The present invention relates to a method for forming the membrane system including a hollow fiber membrane and static mixer arranged within the hollow portion of the hollow fiber membrane.

According to the state of the art, membrane systems including a tubular membrane structure and a static mixer arranged within the tubular membrane structure are only available at specific sizes. Specifically, prior art membrane systems have an inner diameter of the tubular membrane structure of substantially more than 10 mm (for instance see US 5 628 909 B1). However, for certain applications, membrane systems of smaller sizes are needed. Such applications include drinking water and wastewater treatment, food processing, dialysis, reverse osmosis, gas/liquid (e.g. bubble-free oxygenation) and liquid/liquid (e.g. nitrate removal) membrane contactors and membrane reactors (e.g. lignin depolymerisation).

LUELF TOBIAS ET AL: "3D-printed rotating spinnerets create membranes with a twist",JOURNAL OF MEMBRANE SCIENCE, ELSEVIER BV, NL, vol. 555, 13 March 2018 (2018-03-13), pages 7-19 disclose methods of forming a membrane system including a hollow fiber membrane and a static mixer arranged within the hollow portion of the hollow fiber membrane.

US 2003/140790 A1 discloses porous hollow polymer fiber membranes having convoluted inside and/or outside surfaces and spinneret to prepare them.

WO 81/02683 A1, US 2017/246593 A1, US 5 628 909 A and WO 2018/235901 A1 disclose tubular membranes with static mixers.

Furthermore, conventional manufacturing methods require the separate fabrication of the tubular membrane structure and the static mixer, followed by inserting the static mixer into the tubular membrane structure. The insertion of the static mixer into the tubular structure is tedious, specifically in cases where the tubular membrane structure is sensitive to rupture and in cases where the respective size of the tubular membrane structure and the static mixer is rather small. Therefore, a method for manufacturing a membrane system including a tubular membrane structure as well as a static mixer is desired that does not require the step of inserting the static mixer into the tubular membrane structure.

Accordingly, the technical problem underlying the present invention is to provide a method for forming a membrane system including a hollow fiber membrane and a static mixer arranged within the hollow portion of the hollow fiber membrane, that should have a small size; a method for forming a membrane system including a hollow fiber membrane and a static mixer arranged within the hollow portion of the hollow fiber membrane, wherein the membrane structure should be produced without the necessity of introducing the static mixer into the hollow fiber membrane; Herein are described as well a spinneret and a device for the method.

The solution to the above technical problem is achieved by providing the embodiments characterized in the claims.

Described here are a membrane system including a hollow fiber membrane and a static mixer separately arranged within the hollow portion of the hollow fiber membrane, wherein the static mixer includes sections having the shape of a twisted ribbon and the hollow fiber membrane has an inner diameter of at most 10 mm.

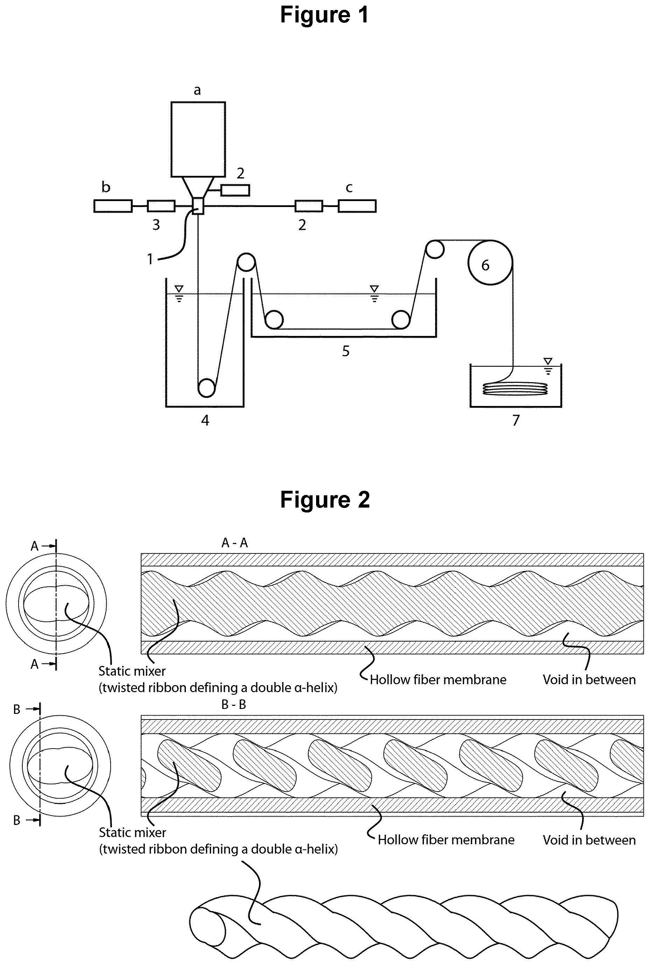

The static mixer is separately arranged within the hollow portion of the hollow fiber membrane, i.e. in terms of material choice and connection the present invention adopts a "decoupled" approach regarding the separate static mixer to be arranged within the hollow fiber membrane (cf. for example Figure 2) while insertion of the separate static mixer and fabrication of the membrane system occur simultaneously.

The twisted ribbon of the static mixer has a maximal diameter that is 5% lower than the inner diameter of the hollow fiber membrane of the membrane system.

More preferably, the static mixer has a width of at most 9.5 mm, particularly at most 9 mm, preferably at most 6.5 mm, more preferably at most 4 mm, particularly preferably at most 2 mm.

The static mixer separately arranged within the hollow portion of the hollow fiber membrane acts as a turbulence promoter. That is, when using the membrane system for filtering a fluid, the static mixer induces non-laminar flow within the hollow portion of the hollow fiber membrane by deflecting the fluid, inducing vortices, enhancing particle back-transport, increasing the shear rate at the membrane surface and the like. As a result, the performance of the membrane system in the filtration of a fluid is substantially improved.

In this context, it must be noted that the membrane system can not only be used for filtration. In particular, the membrane system can be used as membrane contactor and as membrane reactor (gas/liquid and liquid/liquid contacting with a membrane in between a defined interface, wherein species interchange occurs by diffusive mass transfer (comparable to extraction processes)).

Moreover, due to its small design (the hollow fiber membrane of the membrane system has an inner diameter of at most 10 mm), the inventive membrane system has an improved surface to volume ratio as well as a higher mechanical stability.

Although being referred to as "hollow fiber membrane", the hollow fiber membrane of the membrane system may have an inner diameter of 80 µm to less than 500 µm (hollow fiber membrane), 500 µm to less than 5 mm (capillary membrane), or 5 mm to 10 mm (tubular membrane).

Tubular membranes are usually not self-supporting membranes. Conventionally, they are located on the inside of a tube, made of a special kind of material. This material is the supporting layer for the membrane. Because the location of tubular membranes is normally inside a tube, the flow in a tubular membrane is usually inside out. The main cause for this is that the attachment of the membrane to the supporting layer is usually very weak. Because of the size of the membrane surface, plugging of tubular membranes is not likely to occur. A drawback of tubular membranes is that the packing density may be low, which results in high prices per module.

A capillary membrane usually has a mechanical stability which is sufficiently strong to resist filtration pressures. Because of this, the flow through capillary membranes can be both inside out and outside in. The diameter of capillary membranes is smaller than that of tubular membranes. Because of the smaller diameter the chances of plugging are much higher with a capillary membrane. A benefit is that the packing density can be much greater.

Hollow fiber membranes conventionally are membranes with a low diameter. Consequentially, the chances of plugging of a hollow fiber membrane are rather high. The membranes are normally used for the treatment of water with a low suspended solids content. The packing density of a hollow fiber membrane can be very high.

Moreover, the fabrication of the membrane system requires only low costs In particular, hollow fiber membranes often consist of only one material, the larger "tubular membranes" are often composite structures consisting of a non-woven support layer and porous polymer coating. In contrast thereto, the modular construction of the membrane system is much cheaper.

The hollow fiber membrane of the membrane system is not particularly limited. The hollow fiber membrane may have a structure of a conventional hollow fiber membrane. Specifically, the hollow fiber membrane has at least one opening which is suited as an inlet for a fluid to be filtrated. The hollow fiber membrane may include two openings opposed to one another.

The hollow fiber membrane has an inner diameter of at most 10 mm. The inner diameter can be determined by measuring the greatest distance of a cross-section of the hollow fiber membrane, wherein the cross-section is taken in a plane that is perpendicular to the direction along which the hollow fiber membrane extends (fluid flow direction).

The inner diameter of the hollow fiber membrane may vary along the fluid flow direction. However, it is preferred that the inner diameter is substantially constant along the fluid flow direction. Preferably, in case the inner diameter of the hollow fiber membrane varies, the smallest inner diameter is at least 85%, preferably at least 90%, more preferably at least 95%, particularly preferably at least 99% of the largest diameter of the hollow fiber membrane. Moreover, in case the diameter varies, the smallest value is taken as the inner diameter.

According to a preferred embodiment, the hollow fiber membrane has an inner diameter of at most 7.5 mm, preferably at most 5 mm, more preferably at most 3 mm.

The cross-sectional shape of the hollow fiber membrane is not particularly limited. In principle, it may be of any shape such as a regular shape, an irregular shape, a symmetric shape, a polygonal shape such as square, triangle and the like. The polygonal shapes may have rounded edges. According to a preferred embodiment, the hollow fiber membrane of the membrane system has a rotationally symmetric shape wherein the rotation symmetry axis is collinear with the direction along which the hollow fiber membrane extends/the fluid flow direction. It is particularly preferred that the hollow fiber membrane of the membrane system has an annular cross-sectional shape.

The thickness of the membrane material constituting the hollow fiber membrane of the membrane system is not particularly limited. Preferably, the hollow fiber membrane has a membrane thickness of at most 2.000 mm, more preferably at most 1.000 mm, even more preferably at most 750 µm, particularly preferably at most 500 µm. The membrane thickness of the hollow fiber membrane may vary along the direction along which the hollow fiber membrane extends. Preferably, the smallest membrane thickness is at least 90%, more preferably at least 95%, particularly preferably at least 99% of the largest membrane thickness. Herein, in case the thickness varies, the smallest value is taken as the membrane thickness.

According to a further preferred embodiment, the hollow fiber membrane of the membrane system is formed by a porous membrane material. When the membrane material is porous, the membrane system is particularly suited for filtering a fluid or for being used as a membrane contactor or membrane reactor.

The static mixer is arranged within the hollow portion (lumen) of the hollow fiber membrane. The length of the static mixer may be different from the length of the hollow fiber membrane. Here, the "length" is the length dimension of the hollow fiber membrane or the static mixer along the fluid flow direction. That is, the static mixer may be longer than the hollow fiber membrane, shorter than the hollow fiber membrane or may have the same length as the hollow fiber membrane. It is preferred that the length of the static mixer corresponds to the length of the hollow fiber membrane.

According to a further preferred embodiment, each of the hollow fiber membrane and the static mixer are formed from a polymer material. The hollow fiber membrane may be formed from any polymer material that is suitable for a hollow fiber membrane (membrane forming polymer). Such polymer materials include but are not limited to polyvinylidene fluoride (PVDF), polyacrylonitrile (PAN), polypropylene (PP), polyethylene (PE), polysulfone (PSU), polyethersulfone (PES/PESU), polyarylester sulfone (PAES), polyamide (PA), polyphenylene oxide (PPO) and polytetrafluoroethylene (PTFE).

Moreover, the static mixer may be formed from a polymer material that is the same or different from the polymer material of the hollow fiber membrane. These materials include the same as mentioned above in the context of the polymer material of the hollow fiber membrane, i.e. membrane forming polymers such as PVDF, PAN, PP, PE, PSU, PES/PESU, PAES, PA and PPO.

According to a particularly preferred embodiment, each of the hollow fiber membrane and the static mixer are formed from the same polymer material.

Particularly preferred polymer materials are PSU, PVDF, PES/PESU and PAES.

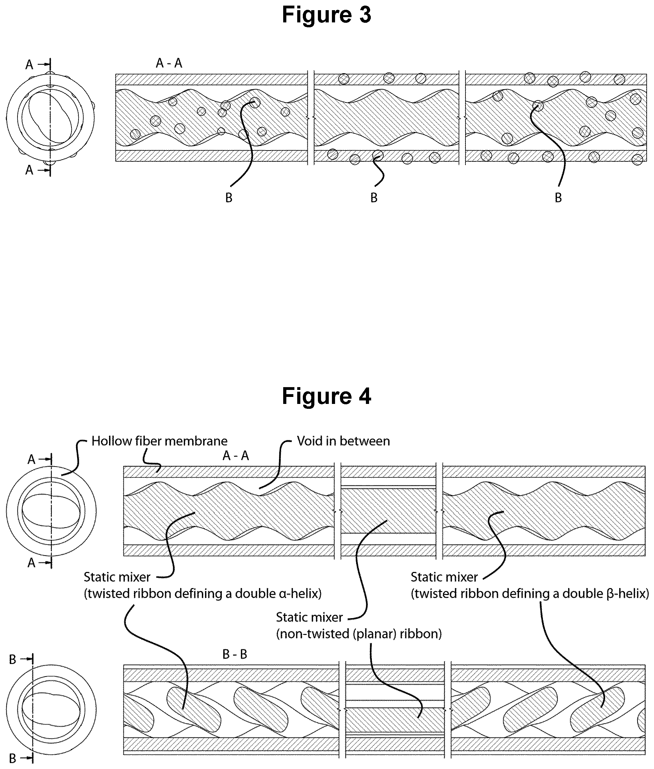

The static mixer includes sections having the shape of a twisted ribbon. In such a shape, each of the two outer edges of the twisted ribbon form a helix so that the twisted ribbon defines a double helix. The static mixer may include sections having the shape of a twisted ribbon defining a double α-helix and/or sections having the shape of a twisted ribbon defining a double β-helix. The sections of double α-helix and/or double β-helix may be interrupted by sections of the static mixer having the shape of a non-twisted (planar) ribbon, where the edges of the ribbon form straight lines (see Figure 4). In more general terms, a preferred embodiment relates to a membrane system wherein the entirety or only one or more sections of the static mixer has/have the shape of a twisted ribbon.

Preferably, the length of a section of the static mixer constituting a ribbon that has been twisted by an angle of 180° is at least 1.5 mm, preferably at least 2.4 mm; and at most 10 mm, preferably at most 7.0 mm. The "length of a section of the static mixer constituting a ribbon that has been twisted by an angle of 180°" refers to the length of one twist by 180° of the twisted ribbon section, i.e. the length of a half turnaround.

According to a preferred embodiment, the hollow fiber membrane and/or the static mixer of the membrane system include(s) particles (B), wherein the hollow fiber membrane and/or the static mixer has/have the particles (B) immobilized. When the hollow fiber membrane and/or the static mixer includes the particles (B), it is preferred that the hollow fiber membrane and/or the static mixer is/are formed from a polymer material, as mentioned above. It is preferred that the static mixer includes the particles (B).

The particles (B) may include particles of at least one second polymer (B'). The second polymer is different from the polymer optionally constituting the hollow fiber membrane and the static mixer. Additionally or alternatively, the particles (B) may include non-polymer particles (B") such as inorganic compound particles, metal particles and the like. The particles (B") are particularly preferred.

The particles (B) can be additives such as ion exchange resins, adsorbents, catalysts, conductive materials, magnetic particles, metal-organic frameworks (MOFs), enzymes, etc. or other (functional) polymers. Different kinds of particles (B) may be included in the hollow fiber membrane and/or the static mixer. The incorporation of the particles (B) into the hollow fiber membrane and/or the static mixer can be carried out by blending the particles (B) into polymer solution (a) and/or (c), as described below.

The weight ratio of the particles (B) is not particularly limited. Preferably, the weight ratio is at most 50 wt%, more preferably at most 40 wt%, even more preferably at most 15 wt%, still more preferably at most 12.5 wt%, more preferably at most 10 wt%, particularly preferably at most 7.5 wt%, most preferably at most 5 wt%, based on the total weight of the membrane system and the particles (B). As the production of the particles (B) may require extensive efforts and costs, a low weight ratio of the particles (B) makes the manufacturing of the membrane system more economical. A high weight ratio of the particles (B) is not necessary in order for them to exhibit their respective effects. Nevertheless, the weight ratio of the particles (B) may be at least 0.01 wt%, preferably at least 0.1 wt%, more preferably at least 0.5 wt% , particularly preferably at least 1.0 wt%, most preferably at least 2.5 wt%.

The weight ratio of the particles (B) refers to the solid weight of the particles (B). The weight ratio of the particles (B) can be determined by thermogravimetric analysis.

The hollow fiber membrane and/or the static mixer has the particles (B) immobilized. That is, the particles (B) are entrapped by the hollow fiber membrane and/or the static mixer. Therefore, the particles (B) cannot be easily removed (e.g. washed out) from the membrane system so that the effects of the partides (B) (such as an increased fouling resistance of the membrane system) is maintained even when the membrane system is used for filtration for a prolonged time period.

According to a preferred embodiment, the particles (B) have an equivalent circular area diameter of 10 nm to 2000 nm, preferably 40 nm to 1800 nm, particularly preferably 100 to 1500 nm, most preferably 400 to 1200 nm. Particles (B) having such a size can be stably immobilized by the hollow fiber membrane and/or the static mixer.

The equivalent circular area diameter of a particle is the diameter of a circle that has the same area as the cross-sectional area of the particle. The cross-sectional area of the particle can be measured by recording a microscopic image of the particle (e.g. by TEM) and determining the area of the particle in the microscopic image. Based on the cross-sectional particle area taken from the microscopic image, the equivalent circular area diameter of a particle can be determined.

According to a preferred embodiment, at least a part of the particles (B) are present on at least one surface of the hollow fiber membrane and/or the surface of the static mixer. Preferably, at least a part of the particles (B) present on the surface are both present on the surface as well as immobilized by the hollow fiber membrane and/or the static mixer. These particles (B) present on the surface are embedded in the hollow fiber membrane / the static mixer so that a highly stable connection with the hollow fiber membrane / the static mixer is established and such that a portion of each of the particles (B) is exposed to the environment of the membrane system. Particles (B) that are present on the surface of the hollow fiber membrane / static mixer can be made visible by means of field emission scanning electron microscopy (FESEM). Moreover, based on FESEM, it is also possible to determine the ratio of the surface area that is covered by the particles (B). According to the present invention, this ratio is not particularly limited. Preferably, the ratio of the surface area that is covered by the particles (B), based on the entire surface area of the surface under consideration, is 1% to 99%, more preferably 10% to 90%, particularly preferably 25% to 75%, most preferably 40% to 60%.

Furthermore, as mentioned above, the particles (B) may include particles of an ion exchange resin, an adsorbent, a catalyst, a conductive material, a magnetic material, etc. or other (functional) polymers. Such kind of particles (B) are particularly advantageous when using the membrane system as a membrane contactor, a membrane reactor or a membrane adsorber. By incorporation of the above particles (B), functional properties can be imparted to the membrane system. Specifically, the above particles (B) can be helpful for catalyzing a chemical reaction, removing substances (e.g. by adsorption), providing electrical conductivity, enabling adjusting the temperature of the membrane system and the like.

The particles (B) can be incorporated into the membrane system of the present invention by post-modifying the membrane system that does not yet have the particles (B). However, it is preferred that the particles (B) are incorporated at the same time the membrane is formed. Thereby, an even distribution of the particles (B) can be obtained and the particles (B) are firmly fixed in the membrane material so that they are not washed out easily. That is, the particles (B) can be incorporated and firmly bound to the membrane material. Furthermore, incorporating the particles (B) in this manner is more simple, cost effective and faster than post-modifying a preliminarily produced membrane.

Incorporating the particles (B) at the same time the membrane is formed may under certain circumstances undesirably affect the structure of the membrane. For instance, even though the incorporated particles (B) are firmly bound to the membrane material, they can exceptionally be washed out. In such a case, a void or hole may remain were formerly a particle (B) was present in the membrane material. Since the particles can be larger than the pore size of the membrane material, the void or hole can be larger than the membrane material's pore size. Thus, the selectivity of the membrane system may worsen. However, when the particles (B) are present in the static mixer only, such a problem does not occur because the filtration effect is mainly governed by the hollow fiber membrane. Therefore, it is preferred that the particles (B) are only present in the static mixer.

Described here is a spinneret having a first outlet opening, a second outlet opening and a third outlet opening, wherein the first outlet opening is arranged on an outlet axis of the spinneret, has an oblong cross-sectional shape and is movable around the outlet axis; the second outlet opening is arranged around the first outlet opening and within the circumference of the third outlet opening; and the third outlet opening is arranged around the first outlet opening and around the circumference of the second outlet opening. The spinneret is suitable for forming a membrane system including a hollow fiber membrane and a static mixer arranged within the hollow portion of the hollow fiber membrane.

Here, the expression "movable around the outlet axis" means that the first outlet opening can be rotated around the outlet axis. In this context, the outlet axis is collinear with the fluid flow direction of a membrane system formed by using the spinneret. Moreover, the outlet axis is collinear with the extrusion direction when using the spinneret for extruding

The first outlet opening has an oblong cross-sectional shape in a cross-section along a plane that is perpendicular to the outlet axis. That is, when looking at the spinneret along a direction that is collinear with the outlet axis, the first outlet opening appears in an oblong shape.

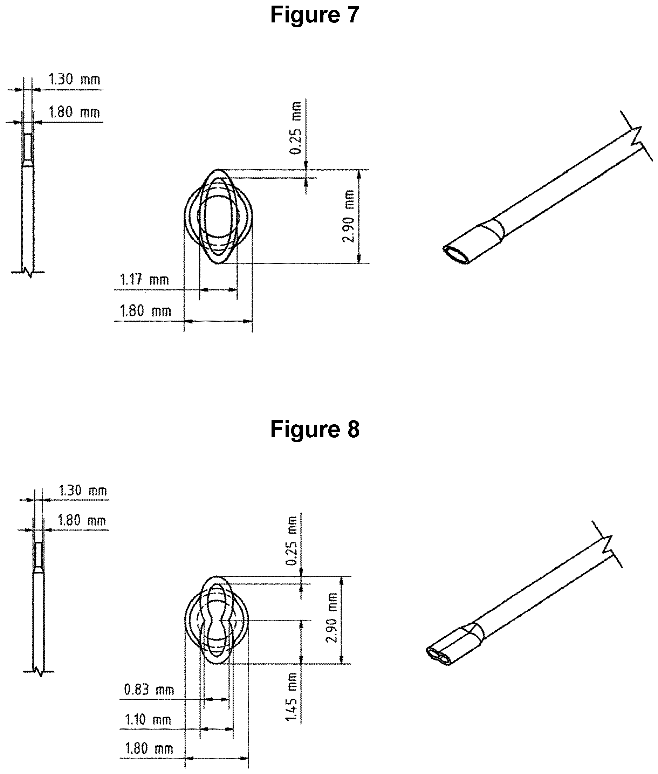

A shape is considered as "oblong" if it has an aspect ratio of more than 1.0, preferably at least 2, particularly preferably at least 5. The oblong cross-sectional shape of the first outlet opening may have the circumferential shape of the number "8" (8-like shape, see Figure 8). Moreover, the oblong cross-sectional shape may have the shape of an ellipse, rectangle and the like. Due to the oblong shape of the first outlet opening, a static mixer having a ribbon shape can be formed by extrusion. Moreover, since the first outlet opening is movable around the outlet axis, it is possible to form sections of the static mixer having the shape of a twisted ribbon by moving the first outlet opening around the outlet axis at the time of extrusion (cf. see the below step (v)).

The aspect ratio of the oblong cross-sectional shape is the ratio of the longest dimension of the oblong cross-sectional shape to the longest length dimension of the cross-sectional shape in a direction perpendicular to the direction of the overall longest length dimension.

The first outlet opening has a diameter of at most 9 mm, preferably at most 6.5 mm, more preferably at most 4 mm, particularly preferably at most 2 mm. When the first outlet opening has a diameter as defined above, the static mixer can be formed with a corresponding width.

The first outlet opening is arranged on an outlet axis of the spinneret. That is, the outlet axis intersects or cuts through the first outlet opening. Preferably, the outlet axis cuts through the centroid of the cross-sectional shape of the first outlet opening.

According to a preferred embodiment, the first outlet opening, the second outlet opening, and/or the third outlet opening has/have a rotationally symmetric shape and the outlet axis is collinear with the rotation symmetry axis of the first outlet opening, the rotation symmetry axis of the second outlet opening and/or the rotation symmetry axis of the third outlet opening. It is particularly preferred that each of the first, second and third outlet openings has a rotationally symmetric shape and that the outlet axis is collinear with the rotation symmetry axis of the first, second and third outlet opening.

According to a further preferred embodiment, the second outlet opening is the outlet opening of a flow channel for a bore solution. Moreover, it is preferred that the first outlet opening is an opening of a hollow shaft defining a flow channel for a polymer solution for forming a static mixer, the hollow shaft is movable around the outlet axis and fluidically connected to a reservoir for the static mixer polymer solution. According to another preferred embodiment, the third outlet opening is the outlet opening of a flow channel for a polymer solution for forming a hollow fiber membrane.

According to a further preferred embodiment, the second outlet opening and/or the third outlet opening has/have an annular cross-sectional shape. It is particularly preferred that each of the second and third outlet openings has an annular cross-sectional shape.

Described here is also a device for extruding a membrane system including a hollow fiber membrane and a static mixer separately arranged within the hollow portion of the hollow fiber membrane, wherein the device includes the above spinneret.

The device includes a motor for moving the first outlet opening around the outlet axis of the spinneret. Preferably, the device includes a motor and a hollow shaft defining a flow path for a polymer solution for forming the static mixer (polymer solution (a)), wherein the first outlet opening is an opening of the hollow shaft and the hollow shaft is movable around the outlet axis and fluidically connected to a reservoir for the static mixer polymer solution (a), wherein the reservoir is also part of the device.

It is further preferred that the device includes a gear box which couples the motor to the hollow shaft. The motor is preferably a stepper motor. Furthermore, the connection between the reservoir for the polymer solution (a) and the hollow shaft is preferably established by a rotation coupling which connects to the hollow shaft such that the rotational movement of the hollow shaft is decoupled from the reservoir for polymer solution (a). Moreover, a connector such as tubing may be comprised by the device in order to fluidically connect the rotation coupling to the reservoir.

In a further aspect, the present invention relates to a method for forming a membrane system including a hollow fiber membrane and a static mixer arranged within the hollow portion of the hollow fiber membrane, comprising the steps (i) providing the above spinneret; (ii) providing a polymer solution (a) for forming the static mixer; (iii) providing a bore solution (b); (iv) providing a polymer solution (c) for forming the hollow fiber membrane; (v) extruding the polymer solution (a) for forming the static mixer through the first opening, extruding the bore solution (b) through the second opening, extruding the polymer solution (c) for forming the hollow fiber membrane through the third opening to form a jet of the solutions (a), (b) and (c); (vi) moving the first opening around the outlet axis for at least a part of the duration of step (v); (vii) immersing the jet into a coagulation bath; to coagulate the hollow fiber membrane and the static mixer. In the immersing step (vii), due to the bore solution and the coagulation bath, the jet is exposed to conditions which result in the coagulation of the hollow fiber membrane as well as the static mixer.

According to the above method of the present invention, it is possible to form a membrane system including a hollow fiber membrane and a static mixer arranged within the hollow portion of the hollow fiber membrane without the necessity of separately forming the hollow fiber membrane and the static mixer and introducing the static mixer into the hollow portion of the hollow fiber membrane, which is tedious and may result in a damage of the hollow fiber membrane. According to the present invention, the hollow fiber membrane and the static mixer are formed simultaneously by extruding polymer solutions (a) and (c) as well as the bore solution (b) through the spinneret according to the present invention.

By employing the method of the present invention, it is possible to form the membrane system according to the present invention wherein the hollow fiber membrane has an inner diameter of at most 10 mm. However, the inventive method also enables the manufacture of membrane systems having larger inner diameters.

In step (i) of the inventive method, the above-described spinneret is provided. The above explanations regarding said spinneret also apply to the method according to the present invention. According to a preferred embodiment of the present invention, in step (i), not only the spinneret but the above device including the spinneret is provided.

In step (ii) of the inventive method, the polymer solution (a) for forming the static mixer is provided. The polymer solution (a) is of the same type as a conventional polymer solution for forming a hollow fiber membrane e.g. by temperature induced phase separation (TIPS) and/or non-solvent induced phase separation (NIPS). Hence, a person skilled in the art is able to select an appropriate solution (a) for forming the static mixer based on his background knowledge.

The same as outlined above with regard to polymer solution (a) applies to polymer solution (c) for forming the hollow fiber membrane which is provided in step (iv) of the method according to the present invention.

Each of polymer solution (a) and polymer solution (c) is a membrane-forming polymer solution. A membrane-forming solution contains at least one membrane-forming polymer and at least one solvent.

Suitable polymers to be included in polymer solutions (a) and (c) include, but are not limited to, PVDF, PAN, PTFE, PP, PE, PSU, PES/PESU, PAES, as already explained above in the context of the membrane system according to the present invention. In this context, the above explanations with regard to said membrane system also apply to the method for forming a membrane system according to the present invention, unless not otherwise stated.

Polymer solutions (a) and (c) may have the same or different compositions. Specifically, the polymer included in solution (a) may be different from the polymer included in solution (c). Each of polymer solutions (a) and (c) may contain one of more different polymers. According to a preferred embodiment of the present invention, polymer solutions (a) and (c) are constituted by the same components but may have different concentrations of the said components. In particular, in view of the minute structure of the static mixer, it is preferred that the polymer solution (a) has a lower solid content/a higher solvent content than the polymer solution (c). Thereby, a lower viscosity of the polymer solution (a) can be achieved, which facilitates the production of the static mixer in the method according to the present invention.

In the method according to the present invention, the hollow fiber membrane and the static mixer can be coagulated by TIPS and/or by NIPS. Typical membrane forming polymers for TIPS include but are not limited to PVDF, PAN, PTFE, PP and PE, wherein PVDF and PAN are also suited for a combination of TIPS and NIPS. Typical membrane forming polymers for NIPS (or a combination of NIPS and TIPS) include but are not limited to, PSU, PES/PESU, PAES, PVDF and PAN.

Each of the solutions (a) and (c) includes at least one solvent. For each of polymer solutions (a) and (c), the at least one solvent is selected such that a solution can be formed of the respective at least one membrane-forming polymer. The at least one solvent preferably includes an organic solvent such as N-methyl-2-pyrrolidone (NMP), dimethylformamide (DMF), dimethylacetamide (DMAc), dimethylsulfoxide (DMSO), tetrahydrofuran (THF), wherein NMP and DMSO are preferred. In addition to the one or more organic solvents, water may be contained as a non-solvent. Preferably, the water is deionized water. According to the present invention, the weight ratio of water to organic solvent in polymer solutions (a) and (c) is preferably 0 to 20%, more preferably 0 to 15%, even more preferably 1 to 15%, particularly preferably 3 to 12%.

In addition to the membrane forming polymer and the solvent, the polymer solutions (a) and (c) may contain a pore-forming additive. Suitable pore-forming additives are known to the skilled person. For instance the pore-forming additive may be a polymer that does not form a membrane (non-membrane-forming polymer) such as polyvinylpyrrolidone (PVP), polyethyleneglycol (PEG), polyoxazoline, polypropylene glycol, polyglycolmonoester, a copolymer of polyethyleneglycol with polypropylene glycol, a water-soluble cellulose derivative, polysorbate, polyethylene-polypropylene oxide copolymer, polyethyleneimine, and combinations thereof. Further pore-forming additives that can be used in solutions (a) and/or (c) are glycerol and lithium chloride. Preferred pore-forming additives are PVP K30 and PVP K90. Here, "K30" and "K90" indicates that the PVP has a K-value of 30 and 90, respectively. The K-value is commonly used for characterizing polymers and directly relates to the average molecular mass of the polymer. The K-value can be taken as an indicator for the degree of polymerization and the polymer chain length.

The bore solution (b) provided in step (iii) of the method according to the present invention is not particularly limited as long as it induces coagulation/precipitation of the membrane-forming polymer solutions (a) and (c). Accordingly, the bore solution contains a non-solvent for the membrane forming polymer, for instance water. Preferably, the bore solution (b) further contains the same constituents as the polymer solutions (a) and (c), except for the membrane-forming polymer. However, the bore solution (b) may also contain constituents different from the ones of the solutions (a) and (c).

According to a preferred embodiment of the present invention, the bore solution (b) contains an organic solvent such as NMP and deionized water. Preferably, the weight ratio of water to organic solvent in the bore solution (b) is 20 to 100%, preferably 40 to 60%. Similar to polymer solutions (a) and (c), the bore solution (b) may contain a non-membrane-forming polymer such as polyvinylpyrrolidone (PVP), polyethyleneglycol (PEG), glycerol, polyoxazoline, polypropylene glycol, polyglycolmonoester, a copolymer of polyethyleneglycol with polypropylene glycol, a water-soluble cellulose derivative, polysorbate, polyethylene-polypropylene oxide copolymer, polyethyleneimine, and combinations thereof. PVP is preferred, even more preferred are PVP K30 and K90. The non-membrane-forming polymer can be added in order to adjust the viscosity of the bore solution and/or for controlling the speed of coagulation. (In the solutions (a) and (c), PVP (e.g. PVP K30 or PVP K90) may exert a pore forming effect during membrane formation and suppresses the formation of macro-voids in membranes.) The content of the non-membrane-forming polymer in the bore solution (b) is preferably 0 to 12 wt%, more preferably 1 to 10 wt%, particularly preferably 2 to 7 wt%.

According to a preferred embodiment of the present invention, at least one of the polymer solution (a), the bore solution (b), the polymer solution (c) and the coagulation bath contains the particles (B) at least at the time of step (vii).

In case the particles (B) are contained in the polymer solution at the time of step (vii) or before, the particles (B) will be substantially evenly distributed over the entire volume of the membrane system. In case the particles (B) are contained in the coagulation bath and/or the bore solution at the time of step (vii) or before, the particles (B) will be present on at least one surface of the hollow fiber membrane and/or the static mixer. It is preferred that the particles (B) are contained in the polymer solution (a) and/or (c) at the time of step (vii) or before. It is particularly preferred that the particles (B) are contained in the polymer solution for forming the static mixer at the time of step (vii) or before.

In step (v) of the method according to the present invention, a jet of the solutions (a), (b) and (c) is extruded by employing the spinneret described above. Specifically, the polymer solution (a) for forming the static mixer is extruded through the first opening of the spinneret, the bore solution (b) is extruded through the second opening of the spinneret, and the polymer solution (c) for forming the hollow fiber membrane is extruded through the third opening of the spinneret. Solutions (a) to (c) are extruded through the respective first, second and third opening at the same time (simultaneously). Thereby, a jet of the solutions (a), (b) and (c) having a specific shape is formed. According to a preferred embodiment of the present invention, the flow rate of the bore solution (b) in step (v) is 1 to 250 ml/min, preferably 2 to 150 ml/min, more preferably 5 to 50 ml/min, for example 7 ml/min.

Moreover, the flow rate (extrusion rate) of polymer solution (c) in step (v) is preferably 1 to 250 g/min, more preferably 2 to 150 g/min, particularly preferably 5 to 50 g/min, for example 7.5 g/min.

In step (v), the flow rate of polymer solution (a) is preferably 0.5 to 150 g/min, more preferably 1 to 50 g/min, particularly preferably 2 to 30 g/min, for instance 3.5 g/min.

According to the present invention, the method for forming a membrane system includes a step (vi) of moving the first opening around the outer axis for at least a part of the duration of step (v). As already noted above, the rotational movement of the first opening results in a static mixer that includes sections that have the shape of a twisted ribbon.

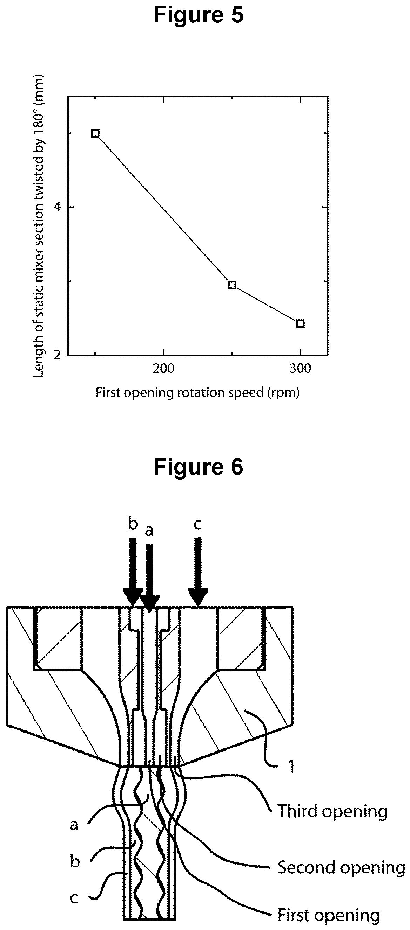

According to a preferred embodiment of the present invention, the first opening is moved (rotated) around the outlet axis at 50 to 5000 rotations/minute, preferably 70 to 1000 rotations/minutes, more preferably 100 to 500 rotations per minute, for example 280 rotations/minutes. By changing the rotation speed of the first opening, the length of a 180°-twist of the twisted ribbon shape of the static mixer can be adjusted (see Figure 5).

According to a further preferred embodiment of the present invention, (vi') the first opening is moved around the outlet axis for the entire duration of step (v); or (vi") the first opening is moved around the outlet axis for a part of the duration of step (v).

When the method according to the present invention includes step (vi'), the entirety of the static mixer has the shape of a twisted ribbon. Moreover, when the method according to the present invention includes step (vi"), only one of more sections of the static mixer has/have the shape of a twisted ribbon, whereas the other sections of the static mixer have the form of a planar ribbon (i.e. a plate shape).

Moreover, in step (vi) of the method according to the present invention, the rotation direction of the first opening may be changed so that the static mixer may include sections having the shape of a twisted ribbon, wherein the outer edges of the twisted ribbon define an α- or a β-double helix.

In step (vii) of the method for forming a membrane system according to the present invention, the jet of the solutions (a), (b) and (c) is immersed into a coagulation bath; to coagulate the hollow fiber membrane and the static mixer. In the immersing step (vii), due to the bore solution and the coagulation bath, the jet is exposed to conditions which result in the coagulation of the hollow fiber membrane as well as the static mixer.

According to a preferred embodiment of the present invention, the coagulation of step (vii) is carried out by temperature induced phase separation (TIPS), by non-solvent induced phase separation (NIPS) or by a combination of TIPS and NIPS. When the coagulation of step (vii) involves TIPS, the coagulation bath has a temperature that is different from the temperature of the jet. Due to the temperature difference, the polymers (a) and (c) are coagulated (precipitated). When step (vii) includes NIPS, the coagulation bath has a composition that results in coagulation of the hollow fiber membrane and the static mixer. In particular, the coagulation bath may include a solvent composition that represents a non-solvent for the polymers of solutions (a) and (c).

The jet of solutions (a) to (c) may be directly immersed into the coagulation bath, i.e. without any gap between the spinneret and the coagulation bath. However, it is preferred in view of processability that there is a gap between the spinneret and the surface of the coagulation bath. Although the gap may be absent (i.e. the gap may have a width of 0 cm), the gap preferably has a width of more than 0 cm, more preferably at least 5 cm, particularly preferably at least 15 cm. The gap width is preferably not longer than 150 cm, more preferably not longer than 50 cm.

According to a preferred embodiment, the method for forming a membrane system according to the present invention further includes a step of (viii) separating (removing) the coagulated hollow fiber membrane and static mixer (membrane system) from the coagulation bath. Subsequent to said step (viii), a step of (ix) immersing the coagulated hollow fiber membrane into a rinsing bath may be carried out. By virtue of said step (ix), the coagulated hollow fiber membrane and static mixture are rinsed (washed) so that components of solutions (a), (b) and (c) which are undesired in the membrane system can be removed.

Furthermore, subsequent to step (viii) or optionally step (ix), a step of (x') immersing the hollow fiber membrane and the static mixer (membrane system) into a collection bath can be carried out. Alternatively, the membrane system can be (x") collected on a collection drum.

The respective composition of the coagulation bath, the rinsing bath and the collection bath is not particularly limited and may include a solvent or solvent composition. As the solvent or solvent composition, an organic solvent and/or water may be used. As mentioned above, the coagulation bath has a composition and/or temperature that results in precipitation/coagulation of the membrane system. Preferably, the coagulation bath, the rinsing bath and the collection bath each consist of deionized water.

According to a preferred embodiment of the present invention, step (vii) and optionally steps (viii) to (x') are carried out by dragging the coagulated hollow fiber membrane and static mixer by means of a pulling wheel. Preferably, the pulling wheel pulls the coagulated hollow fiber membrane and static mixer (membrane system) at a speed of 0.1 to 40 m/min, more preferably 0.5 to 20 m/min, particularly preferably 0.7 to 7 m/min, for example 1.5 m/min.

Another possibility for manufacturing the membrane system including the particles (B) is post-modifying the membrane system that does not yet have the particles (B).
Figure 1 schematically shows a method for manufacturing a membrane system according to the present invention.
Figure 2 schematically shows a membrane system.
Figure 3 schematically shows membrane systems including particles (B).
Figure 4 schematically shows a membrane system having a specific geometry of the static mixer.
Figure 5 shows that the length of a twist of the static mixer by 180° can be adjusted by varying the speed of moving the first opening around the outlet axis.
Figure 6 schematically shows a spinneret being used in a process for forming a membrane system according to the present invention.
Figure 7 schematically shows an exemplary first outlet opening of a spinneret.
Figure 8 schematically shows another exemplary first outlet opening of a spinneret.

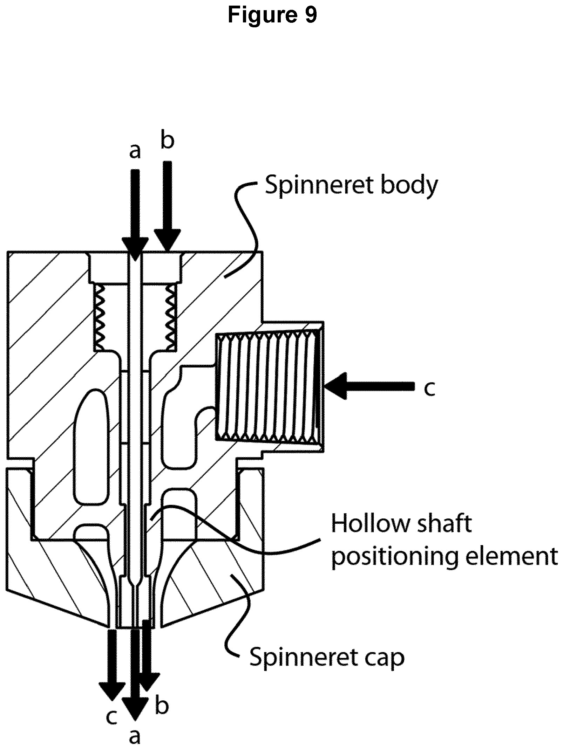

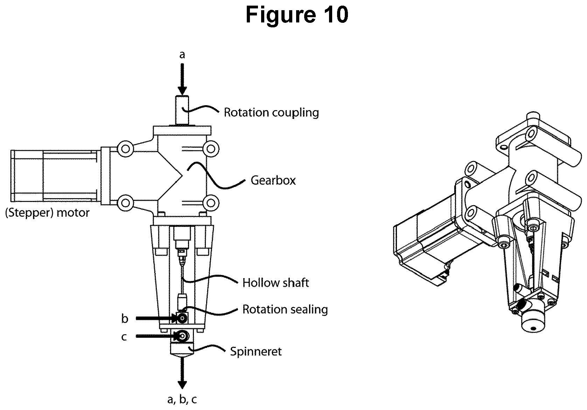

Figures 9 and 10 schematically show devices for manufacturing the membrane system.
Figure 11 displays an image of a membrane system obtained by micro X-ray computed tomography (CT).

### Reference sign list

- 1: Spinneret
- 2: Gear pump for polymer solution
- 3: Pump for bore solution
- 4: Coagulation bath
- 5: Washing bath
- 6: Pulling wheel
- 7: Collection bath

The present invention is further illustrated based on the following Example without being limited thereto.

### Example

A membrane system including a hollow fiber membrane and a static mixer was produced under the following experimental conditions.

### Compositions of polymer solutions (a), (b) and (c)

### Hollow fiber membrane polymer solution (c)

| | |
|---|---|
| Polyethersulfone (PES) | 17 wt% |
| N-Methyl-2-pyrrolidone (NMP) | 67.5 wt% |
| Deionized water | 3.5 wt% |
| Polyvinylpyrrolidone (PVP K30) | 6 wt% |
| Polyvinylpyrrolidone (PVP K30) | 6 wt% |

### Static mixer polymer solution (a)

| | |
|---|---|
| Polyethersulfone (PES) | 15 wt% |
| N-Methyl-2-pyrrolidone (NMP) | 74 wt% |
| Deionized water | 7 wt% |
| Polyvinylpyrrolidone (PVP K30) | 2 wt% |
| Polyvinylpyrrolidone (PVP K30) | 2 wt% |

### Bore solution (b)

| | |
|---|---|
| N-Methyl-2-pyrrolidone (NMP) | 40 wt% |
| Deionized water | 50 wt% |
| Polyvinylpyrrolidone (PVP K30) | 5 wt% |
| Polyvinylpyrrolidone (PVP K30) | 5 wt% |

### Spinning parameters

### Hollow fiber membrane

| | |
|---|---|
| Polymer solution (c) flow rate | 7.5 g/min |
| Bore solution (b) flow rate | 7 mL/min |
| Air gap length | 10 cm |
| Fiber pulling speed | 1.5 m/min |
| Temperature | room temperature (25 °C) |

### Static mixer

| | |
|---|---|
| Polymer solution (a) flow rate | 3.5 g/min |
| First outlet opening rotation speed | 280 rotations/minute |
| Temperature | room temperature (25 °C) |

### Coagulation bath

| | |
|---|---|
| Composition | 100 wt% deionized water |
| Temperature | room temperature (25 °C) |

### Rinsing bath

| | |
|---|---|
| Composition | 100 wt% deionized water |
| Temperature | room temperature (25 °C) |

### Collection bath

| | |
|---|---|
| Composition | 100 wt% deionized water |
| Temperature | room temperature (25 °C) |

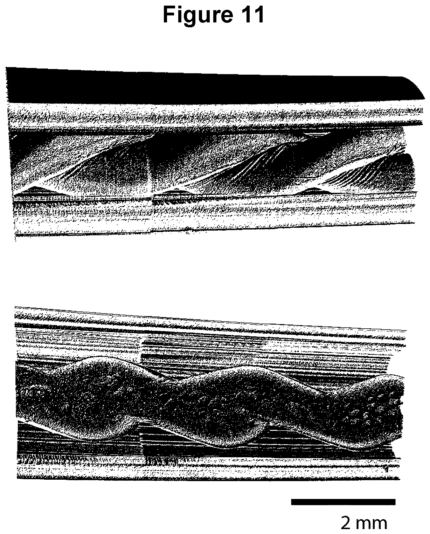

The result is displayed in Figure 11.

## Claims

1. A method for forming a membrane system including a hollow fiber membrane and a static mixer arranged within the hollow portion of the hollow fiber membrane, comprising the steps
(i) providing a spinneret having a first outlet opening, a second outlet opening and a third outlet opening, wherein
the first outlet opening is arranged on an outlet axis of the spinneret, has an oblong cross-sectional shape and is movable around the outlet axis;
the second outlet opening is arranged around the first outlet opening and within the circumference of the third outlet opening; and
the third outlet opening is arranged around the first outlet opening and around the circumference of the second outlet opening;
(ii) providing a polymer solution (a) for forming the static mixer;
(iii) providing a bore solution (b);
(iv) providing a polymer solution (c) for forming the hollow fiber membrane;
(v) extruding the polymer solution (a) for forming the static mixer through the first opening, extruding the bore solution (b) through the second opening, extruding the polymer solution (c) for forming the hollow fiber membrane through the third opening to form a jet of the solutions (a), (b) and (c);
(vi) moving the first opening around the outlet axis for at least a part of the duration of step (v);
(vii) immersing the jet into a coagulation bath;
to coagulate the hollow fiber membrane and the static mixer.

2. The method according to claim 1,
wherein the polymer solutions (a) and (c) independently include one or more polymers selected from the group consisting of polyvinylidene fluoride (PVDF), polyacrylonitrile (PAN), polypropylene (PP), polyethylene (PE), polysulfone (PSU), polyethersulfone (PES/PESU), polyarylethersulfone (PAES), polyamide (PA), and polyphenylene oxide (PPO).

3. The method according to claim 1 or 2, wherein
(vi') the first opening is moved around the outlet axis for the entire duration of step (v); or
(vi") the first opening is moved around the outlet axis for a part of the duration of step (v).

4. The method according to any one of claims 1 to 3, wherein
the first opening is moved around the outlet axis at 50 to 5000 rotations/minute.

5. The method according to any one of claims 1 to 4, wherein
the coagulation of step (vii) is carried out by temperature induced phase separation (TIPS) and/or by non-solvent induced phase separation (NIPS).

6. The method according to any one of claims 1 to 5, further including a step of
(viii) separating the coagulated hollow fiber membrane and static mixer from the coagulation bath.

## Patentansprüche

1. Verfahren zur Bildung eines Membransystems, das eine Hohlfasermembran und einen statischen Mischer umfasst, der innerhalb des hohlen Abschnitts der Hohlfasermembran angeordnet ist, umfassend die Schritte
(i) Bereitstellen einer Spinndüse mit einer ersten Auslassöffnung, einer zweiten Auslassöffnung und einer dritten Auslassöffnung, wobei
die erste Auslassöffnung auf einer Auslassachse der Spinndüse angeordnet ist, eine längliche Querschnittsform aufweist und um die Auslassachse beweglich ist; die zweite Auslassöffnung um die erste Auslassöffnung herum und innerhalb des Umfangs der dritten Auslassöffnung angeordnet ist; und
die dritte Auslassöffnung um die erste Auslassöffnung und um den Umfang der zweiten Auslassöffnung herum angeordnet ist;
(ii) Bereitstellen einer Polymerlösung (a) zur Bildung des statischen Mischers;
(iii) Bereitstellen einer Bohrlösung (b);
(iv) Bereitstellen einer Polymerlösung (c) zur Bildung der Hohlfasermembran;
(v) Extrudieren der Polymerlösung (a) zur Bildung des statischen Mischers durch die erste Öffnung, Extrudieren der Bohrlösung (b) durch die zweite Öffnung, Extrudieren der Polymerlösung (c) zur Bildung der Hohlfasermembran durch die dritte Öffnung, um einen Strahl der Lösungen (a), (b) und (c) bilden;
(vi) Bewegen der ersten Öffnung um die Auslassachse für mindestens einen Teil der Dauer von Schritt (v);
(vii) Eintauchen des Strahls in ein Koagulationsbad;
zum Koagulieren der Hohlfasermembran und des statischen Mischers.

2. Verfahren nach Anspruch 1,
wobei die Polymerlösungen (a) und (c) unabhängig voneinander ein oder mehrere Polymere umfassen, ausgewählt aus der Gruppe, bestehend aus Polyvinylidenfluorid (PVDF), Polyacrylnitril (PAN), Polypropylen (PP), Polyethylen (PE), Polysulfon (PSU), Polyethersulfon (PES/PESU), Polyarylethersulfon (PAES), Polyamid (PA) und Polyphenylenoxid (PPO).

3. Verfahren nach Anspruch 1 oder 2, wobei
(vi') die erste Öffnung während der gesamten Dauer von Schritt (v) um die Auslassachse bewegt wird; oder
(vi") die erste Öffnung für einen Teil der Dauer von Schritt (v) um die Auslassachse bewegt wird.

4. Verfahren nach einem der Ansprüche 1 bis 3, wobei
die erste Öffnung mit 50 bis 5000 Umdrehungen/Minute um die Auslassachse bewegt wird.

5. Verfahren nach einem der Ansprüche 1 bis 4, wobei
die Koagulation von Schritt (vii) durch temperaturinduzierte Phasentrennung (TIPS) und/oder durch nicht-lösungsmittelinduzierte Phasentrennung (NIPS) erfolgt.

6. Verfahren nach einem der Ansprüche 1 bis 5, weiter umfassend einen Schritt
(viii) Trennen der koagulierten Hohlfasermembran und des statischen Mischers von dem Koagulationsbad.

## Revendications

1. Procédé de formation d'un système de membrane incluant une membrane à fibres creuses et un mélangeur statique agencé au sein de la portion creuse de la membrane à fibres creuses, comprenant les étapes
(i) fournir une filière ayant une première ouverture de sortie, une deuxième ouverture de sortie et une troisième ouverture de sortie, dans lequel
la première ouverture de sortie est agencée sur un axe de sortie de la filière, a une forme oblongue en coupe transversale et est mobile autour de l'axe de sortie ;
la deuxième ouverture de sortie est agencée autour de la première ouverture de sortie et au sein de la circonférence de la troisième ouverture de sortie ; et
la troisième ouverture de sortie est agencée autour de la première ouverture de sortie et autour de la circonférence de la deuxième ouverture de sortie ;
(ii) fournir une solution polymère (a) pour former le mélangeur statique ;
(iii) fournir une solution d'alésage (b) ;
(iv) fournir une solution polymère (c) pour former la membrane à fibres creuses ;
(v) extruder la solution polymère (a) pour former le mélangeur statique à travers la première ouverture, extruder la solution d'alésage (b) à travers la deuxième ouverture, extruder la solution polymère (c) pour former la membrane à fibres creuses à travers la troisième ouverture pour former un jet des solutions (a), (b) et (c) ;
(vi) déplacer la première ouverture autour de l'axe de sortie pendant au moins une partie de la durée de l'étape (v) ;
(vii) immerger le jet dans un bain de coagulation ;
pour coaguler la membrane à fibres creuses et le mélangeur statique.

2. Procédé selon la revendication 1,
dans lequel les solutions polymères (a) et (c) incluent indépendamment un ou plusieurs polymères sélectionnés parmi le groupe constitué du fluorure de polyvinylidène (PVDF), polyacrylonitrile (PAN), polypropylène (PP), polyéthylène (PE), polysulfone (PSU), polyéthersulfone (PES/PESU), polyaryléthersulfone (PAES), polyamide (PA) et oxyde de polyphénylène (PPO).

3. Procédé selon la revendication 1 ou 2, dans lequel
(vi') la première ouverture est déplacée autour de l'axe de sortie pendant la durée entière de l'étape (v) ; ou
(vi") la première ouverture est déplacée autour de l'axe de sortie pendant une partie de la durée de l'étape (v).

4. Procédé selon l'une quelconque des revendications 1 à 3, dans lequel
la première ouverture est déplacée autour de l'axe de sortie à 50 à 5000 tours/minute.

5. Procédé selon l'une quelconque des revendications 1 à 4, dans lequel
la coagulation de l'étape (vii) est réalisée par séparation de phases induite par la température (TIPS) et/ou par séparation de phases induite par un non-solvant (NIPS).

6. Procédé selon l'une quelconque des revendications 1 à 5, incluant en outre une étape de
(viii) séparation de la membrane à fibres creuses coagulée et du mélangeur statique du bain de coagulation.
